(19)

**Europäisches Patentamt**
**European Patent Office**
**Office européen des brevets**

(11)   **EP 4 345 742 B1**

(12)   **EUROPEAN PATENT SPECIFICATION**

(45) Date of publication and mention
of the grant of the patent:
**07.05.2025   Bulletin 2025/19**

(21) Application number: **22198725.8**

(22) Date of filing: **29.09.2022**

(51) International Patent Classification (IPC):
**G06T 7/00** *(2017.01)*    **G06T 7/70** *(2017.01)*

(52) Cooperative Patent Classification (CPC):
**G06T 7/0012; G06T 7/70;** G06T 2207/10112;
G06T 2207/10116; G06T 2207/10121;
G06T 2207/20072; G06T 2207/20076;
G06T 2207/20081; G06T 2207/20084;
G06T 2207/20104; G06T 2207/30008;
G06T 2207/30068; G06T 2207/30168

(54) **COMPUTER-IMPLEMENTED METHOD FOR PROVIDING A POSITIONING SCORE REGARDING A POSITIONING OF AN EXAMINING REGION IN AN X-RAY IMAGE**

COMPUTERIMPLEMENTIERTES VERFAHREN ZUR BEREITSTELLUNG EINER POSITIONIERUNGSBEWERTUNG BEZÜGLICH EINER POSITIONIERUNG EINES UNTERSUCHUNGSBEREICHS IN EINEM RÖNTGENBILD

PROCÉDÉ MIS EN UVRE PAR ORDINATEUR POUR FOURNIR UN SCORE DE POSITIONNEMENT CONCERNANT LE POSITIONNEMENT D'UNE RÉGION D'EXAMEN DANS UNE IMAGE RADIOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.04.2024   Bulletin 2024/14**

(73) Proprietor: **Siemens Healthineers AG**
**91301 Forchheim (DE)**

(72) Inventors:
• **Datar, Manasi**
**99084 Erfurt (DE)**
• **Biniazan, Ramyar**
**90402 Nürnberg (DE)**
• **Zerfass, Peter**
**90763 Fürth (DE)**

(74) Representative: **Siemens Healthineers**
**Patent Attorneys**
**Postfach 22 16 34**
**80506 München (DE)**

(56) References cited:
**US-A1- 2021 321 968**

• **KARIM MD REZAUL ET AL: "DeepKneeExplainer: Explainable Knee Osteoarthritis Diagnosis From Radiographs and Magnetic Resonance Imaging", IEEE ACCESS, IEEE, USA, vol. 9, 26 February 2021 (2021-02-26), pages 39757 - 39780, XP011843910, DOI: 10.1109/ ACCESS.2021.3062493**

EP 4 345 742 B1

**Description**

The invention relates to computer-implemented method for providing a positioning score regarding a positioning of an examining region in an X-ray image, wherein the computer-implemented method allows the user to understand and follow the steps towards the determination of the positioning score. The invention further relates to a scoring system, a computer-readable medium, a computer program product and an X-ray system, each with corresponding features to the computer-implemented method.

An X-ray system, e.g. a radiography system or a fluoroscopy system, comprises an X-ray source and an X-ray detector. The examination object, in particular a patient, is arranged between the X-ray source and the X-ray detector so that an X-ray image of an examination region can be acquired.

A mammography system includes an X-ray source and an X-ray detector, with a breast arranged between the X-ray source and the X-ray detector. The examination area comprises the breast, especially the entire breast. In general, the breast is compressed or fixed by means of a compression unit. For this purpose, in particular, the surface of the X-ray detector or a housing of the X-ray detector and an essentially parallel arranged compression plate can be used. Furthermore, other forms of the compression unit are known. An X-ray data set can be generated. The X-ray data set may include a digital full-field mammography image and / or a tomosynthesis image.

Modern mammography systems offer a tomosynthesis function to generate a series of projections that allow a three-dimensional representation of the breast using reconstructed layers. Here, the X-ray emitter or the X-ray source moves in an angular range of 15 to 50 degrees over the compressed breast. The digital full-field mammography image and the tomosynthesis image can also be acquired together within a single compression (per breast).

One of the major problems in radiological (x-ray) examinations is the high rate of rejected images due to poor image quality. According to one study by B. Hofmann et al, Image rejects in general direct radiography, (Norway), 51.3 % of images are rejected due to positioning errors. A rejected image does not contribute to diagnostics, and therefore is a useless image which causes additional exposure of patients to obtain a correctly positioned image. For this reason, it is important to have a technique to improve acquisition accuracy for x-ray exams through quality analysis and feedback about position accuracy.

Among radiographic images, knee images have the highest relative rate of being rejected/deleted (e.g. 20,1% according to Hofmann) with the most prevalent reason being 'positioning of patient or system'. Many images are rejected despite being adequate for medical decisions.

There are several solutions and techniques to address positioning problems for x-ray images. In general, most of the current solutions can be categorized in one of the two following approaches:
The first approach relies on segmentation of different organs and landmarks in the x-ray image and by having those landmarks, one can define some general rules based on measurements to evaluate different positioning criteria. Such solutions are heavily dependent on the accuracy of landmark detection and segmentation models, and only a few millimeters error can lead to wrong positioning evaluation. Within a knee segmentation a small error of fibular head segmentation can lead to two different positioning evaluations.

The second approach does not require segmentation masks and can evaluate different positioning criteria by only having the input image. In this approach, different models for different criteria have been trained to categorize input image, let us consider the previous example for fibular head overlap in knee images. A model should be trained in a way to evaluate rotation of knee based on this criterion by observing huge dataset. Still, the problem remains that the user can not follow and/or influence the determination of the positioning analysis.

Current AI based solutions use black-box models and provide results that are difficult to interpret or explain, leading to concerns regarding their trustworthiness and reliability. This hampers the widespread acceptance of AI based solutions in applications such as image positioning. There have been efforts to interpret or explain the AI model decision-making process using feature/saliency maps to indicate the importance of various image regions toward the model output. These saliency maps typically back-propagate gradients and project them onto the image plane, allowing the user to visualize an approximation of the underlying process followed by the AI model. Saliency maps attempt to improve AI interpreta-bility but do not address AI transparency and explainability in a comprehensive manner. Such AI-based approaches are, for instance, known from US 2021/0321968 A1.

It is an object of the invention to provide a computer-implemented method for providing a positioning score regarding a positioning of an examining region in an X-ray image, a scoring system, a computer program product, a computer-readable medium, and an X-ray system, which allows the user to understand and follow the steps towards the determination of the positioning score.

The object of the invention is solved by a computer-implemented method for providing a positioning score regarding a positioning of an examining region in an X-ray image according to claim 1, a scoring system according to claim 10, a computer program product according to claim 11, a computer-readable medium according to claim 12, and an X-ray system according to claim 13.

In the following the solution according to the invention is described with respect to the claimed scoring systems as well as with respect to the claimed methods. Features, advantages or alternative embodiments herein can be assigned to the other claimed objects and vice versa. In other words, claims for the scoring systems can be improved with features described or claimed in the context of the methods. In this case, the functional features of the method are embodied by objective units of the scoring system.

Furthermore, in the following the solution according to the invention is described with respect to methods and systems for providing a positioning score regarding a positioning of an examining region in an X-ray image as well as with respect to methods and systems for the training of the trained functions. Features, advantages or alternative embodiments herein can be assigned to the other claimed objects and vice versa. In other words, claims for methods and systems for training of the trained function can be improved with features described or claimed in context of the methods and systems for providing a positioning score regarding a positioning of an examining region in an X-ray image, and vice versa.

In particular, the trained function of the methods and systems for providing complete set of second key elements in an X-ray image can be adapted by the methods and systems for training of the trained function. Furthermore, the input data can comprise advantageous features and embodiments of the training input data, and vice versa. Furthermore, the output data can comprise advantageous features and embodiments of the output training data, and vice versa.

The inventors found that especially for knee examinations, the positioning is crucial. As a reason, this invention would focus more on knee x-ray images as a major application for proposed solution. It is noteworthy to mention that the proposed solution can be extended for use in all x-ray examinations.

The invention relates to a computer-implemented method for providing a positioning score regarding a positioning of an examining region in an X-ray image, comprising:

- Receiving input data, in particular with a first interface, wherein the input data comprises an X-ray image comprising the examining region,
- Applying a first trained function to the input data, in particular with a first computation unit, wherein at least one region of interest is detected in the X-ray image and a heatmap comprising the at least one region of interest is generated,
- Applying a second trained function to the input data, in particular with a second computation unit, and the heatmap, wherein an individual score for each of the at least one region of interest is generated, and a score-weighted heatmap is generated based on the at least one region of interest and the individual scores,
- Applying a third trained function to the input data, in particular with a third computation unit, and the score-weighted heatmap, wherein a positioning score is generated,
- Providing the positioning score, in particular with a second interface.

According to an embodiment of the invention, the X-ray image is a two-dimensional X-ray image.

According to an embodiment of the invention, the first trained function is based on an object detection network, preferably the RetinaNet.

According to an embodiment of the invention, the second trained function and/or the third trained function is based on a classifier, preferably the Densenet, or a regression model.

According to an embodiment of the invention, the initial convolution layer is modified to focus the network attention based on the heatmap and/or the score-weighted heatmap.

According to an embodiment of the invention, the heatmap and/or the at least one region of interest is displayed.

According to an embodiment of the invention, the user can adjust the heatmap and/or the at least one region of interest.

According to an embodiment of the invention, the position scored describes a rotation of the examining region.

According to an embodiment of the invention, the examining region comprises a knee, the thorax, or a breast.

The invention further relates to a scoring system, comprising:

- a first interface, configured for receiving input data,
  wherein the input data comprises an X-ray image comprising the examining region,
- a first computation unit, configured for applying a first trained function to the first input data, wherein first output data is generated, wherein at least one region of interest is detected in the X-ray image and a heatmap comprising the at least one region of interest is generated,
- a second computation unit, configured for applying a second trained function to the input data and the heatmap, wherein an individual score for each of the at least one region of interest is generated, and a score-weighted heatmap is generated based on the at least one region of interest and the individual scores,
- a third computation unit, configured for applying a third trained function to the input data and the score-weighted heatmap, wherein a positioning score is generated,
- a second interface, configured for providing the positioning score.

The invention further relates to a computer program product comprising instructions which, when the program is executed by a scoring system, cause the scoring system to carry out the method according to the invention.

The invention further relates to a computer-readable medium comprising instructions which, when executed by a scoring system, cause the scoring system to carry out the method according to the invention.

The invention further relates to an X-ray system comprising the scoring system according to the invention.

According to an embodiment of the invention, the X-ray system is a radiography system or a mammography system.

Disclosed herein is further a computer-implemented method for providing a third trained function, comprising:

- receiving input training data, wherein the input training data comprises an X-ray image corresponding,
- receiving output training data, wherein the output training data is related to the input training data, wherein the output training data comprises a positioning score,
- training a first function, a second function and a third function based on the input training data and the output training data,
- providing the first trained function, a second trained function and a third trained function.

Disclosed herein is furhter a training system, comprising

- a first training interface, configured for receiving input training data, wherein the input training data comprises an X-ray image,
- a second training interface, configured for receiving output training data, wherein the output training data is related to the input training data, wherein the output training data comprises a positioning score,
- a training computation unit, configured for training a first function, a second function and a third function based on the input training data and the output training data,
- a third training interface, configured for providing the first trained function, a second trained function and a third trained function.

In general, parameters of a trained function can be adapted by means of training. In particular, supervised training, semi-supervised training, unsupervised training, reinforcement learning and/or active learning can be used. Furthermore, representation learning (an alternative term is "feature learning") can be used. In particular, the parameters of the trained functions can be adapted iteratively by several steps of training.

In particular, a trained function can comprise a neural network, a support vector machine, a decision tree and/or a Bayesian network, and/or the trained function can be based on k-means clustering, Q-learning, genetic algorithms and/or association rules. In particular, a neural network can be a deep neural network, a convolutional neural network or a convolutional deep neural network. Furthermore, a neural network can be an adversarial network, a deep adversarial network and/or a generative adversarial network.

The idea behind this invention is to build a transparent, in-terpretable and explainable AI model for positioning check in radiological images or X-ray images in general. In the current manual workflow, an expert user performs the following steps:

1. Identify various regions of interest (ROI) based on the anatomy being scanned.
2. Score the identified ROI based on their quality.
3. Score the overall positioning within the image based on the ROIs and scores from previous steps.

This invention formulates an analogous AI-based workflow with explicit sub-tasks corresponding to each of the steps in the manual workflow.

A modular pipeline for AI-based positioning check is proposed. A radiographic image or an X-ray image is used as input. The expected output is the overall score indicating the quality of positioning for the given image. The AI-based sub-tasks are encapsulated by three modules:

1. ROI detector for object detection as a first trained function;
2. Bank of ROI scoring modules for classification or regression as a bank of second trained functions,
3. Overall scoring module for classification or regression as a third trained function.

The first trained function which can be called the ROI Detector uses radiographic image or an X-ray image as input, and provides relevant ROIs in the image as output. The first trained function or the ROI detector detects and identifies all relevant ROIs present in the image. This module can be realized using an available object detection network such as the RetinaNet.

The bank of second trained functions which can be called a bank of ROI scoring modules uses a radiographic image or an X-ray image as well as a ROI heatmap as input and provides individual ROI scores as output.

The second trained functions or the ROI scoring modules score each available ROI by focusing attention on the corresponding image region underlying the ROI. This is achieved by using an additional input based on a heatmap representation of the ROI. An ROI scoring module can be realized using an available classifier architecture such as the Densenet and modifying the initial convolution layer to focus the network attention based on the ROI heatmap. The classifier architecture can be replaced with a regression model to increase the scoring sensitivity from a categorical to a continuous range.

The third trained function can be called the overall scoring module. The third trained function uses a radiographic image or an X-ray image as well as a score-weighted ROI heatmap as input and provides the final positioning score as output.

The overall scoring module computes the final positioning score for the input radiographic image by focusing attention on the image region underlying all available ROIs and their corresponding scores. This is achieved by using an additional input based on an aggregated score-weighted heatmap representation of all available ROIs. An overall scoring module can be realized using an available classifier architecture such as the Densenet and modifying the initial convolution layer to focus the network attention based on the aggregated, score-weighted heatmap. The classifier architecture can be replaced with a regression model to increase the scoring sensitivity from a categorical to a continuous range.

To explain the idea behind the invention, three applications have been chosen, to show how proposed method can be used to assess positioning criteria.

As it was mentioned before, knee positioning check is the main application for proposed method. Two of the most important criteria in knee x-ray images is the position of Fibular head and the location of Patellar center. Both landmarks are used to evaluate rotation in knee images. For first criteria, the amount of overlap between Fibular head and Tibia could indicate rotation. In this case, when the amount of overlap is less than or more than a certain range (e.g. 25% of Fibular width) this could indicate internal or external rotation respectively. In second criteria, location of Patellar is compared to center of Femur. In case of not being exactly in the center, one can assume that there is a possibility of rotation. Our proposed method can be used in this application by first detecting the region of interests by the ROI detector and then categorizing those ROIs (ROI scoring) and finally judge the overall rotation of knee by having all previous results (Overall scoring).

Another application could be evaluating the rotation of chest x-ray images. Here, position of vertebra column and Clavicles are compared to each other to estimate rotation. By having the ROI of this specific region and categorizing it, one can define rotation of whole image.

Another application is related to positioning check of mammography images. In this case, location of nipple and the in-framammary fold (IMF) shape is important to evaluate the position of breast. Again, one can evaluate these positioning criteria by defining ROIs and respective scores to them.

The proposed method provides insights into the decision-making process by deconstructing the task into its component steps and providing corresponding intermediate outputs as explanations. The component steps are designed based on the workflow of an expert user and provide transparency, inter-pretability and explicit explainability to our AI model's decision-making process.

The proposed method additionally allows for expert intervention or feedback at any step of the AI model's decision-making process by allowing the expert user to change the ROI (region of interest) definition at any step and/or attach increased/decreased importance to certain ROIs based on application-specific criteria.

The feedback in the form of modified ROI definition and/or scores can be used to retrain the corresponding models in the pipeline in an incremental (online) manner leading to improved accuracy across all intermediate steps for new/unseen cases.

Examples of embodiments of the invention are explained in more detail below by means of drawings.

FIG 1 a schematic representation of the method for providing a positioning score regarding a positioning of an examining region in an X-ray image;

FIG 2 a schematic representation of the application of a second trained function;

FIG 3 a schematic representation of the application of a third trained function;

FIG 4 a schematic representation of a neural network according to the invention; and

FIG 5 a schematic representation of a convolutional neural network according to the invention.

FIG 6 a schematic representation of a mammography system; and

FIG 7 a schematic representation of an X-ray system.

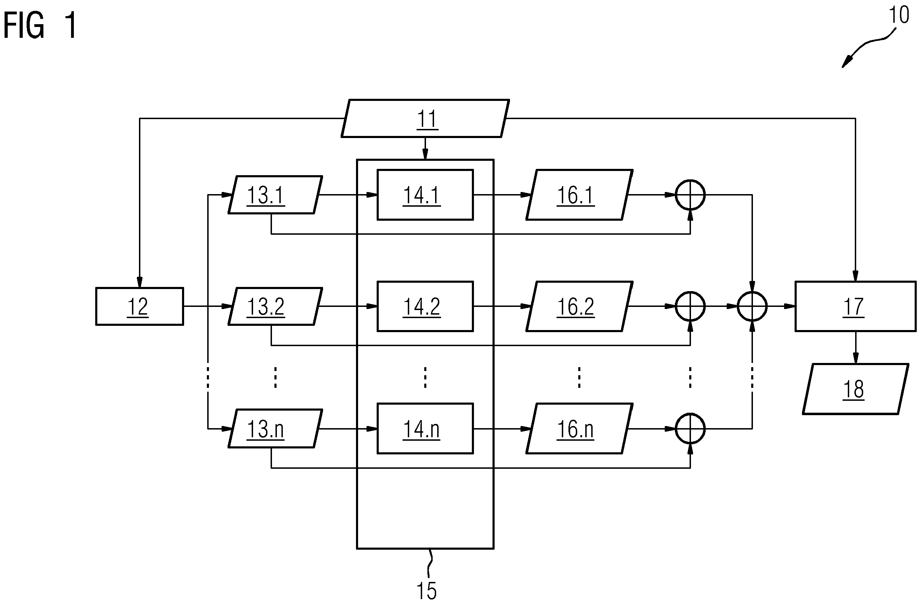

Fig. 1 displays an embodiment of the method 10 for providing a positioning score regarding a positioning of an examining region in an X-ray image according to the invention. The computer-implemented method 10 for providing a positioning score regarding a positioning of an examining region in an X-ray image, comprises the steps, preferably in the following order:

- Receiving input data wherein the input data comprises an X-ray image 11 comprising the examining region,
- Applying a first trained function 12 to the input data, wherein at least one region of interest 13.1, 13.2,..., 13.n is detected in the X-ray image and a heatmap comprising the at least one region of interest is generated,
- Applying a second trained function 14.1, 14.2, ..., 14.n to the input data and the heatmap, wherein an individual score for each of the at least one region of interest is generated, and a score-weighted heatmap is generated based on the at least one region of interest and the individual scores 16.1, 16.2, ..., 16.n,
- Applying a third trained function 17 to the input data and the score-weighted heatmap, wherein a positioning score is generated,
- Providing the positioning score 18.

The X-ray image 11 is a two-dimensional X-ray image. The first trained function 12 is based on an object detection network, preferably the RetinaNet. The second trained function 14.1, 14.2, ..., 14.n and/or the third trained function 17 is based on a classifier, preferably the Densenet, or a regression model. The initial convolution layer is modified to focus the network attention based on the heatmap and/or the score-weighted heatmap. The heatmap and/or the at least one region of interest 13.1, 13.2,..., 13.n is displayed. The user can adjust the heatmap 19 and/or the at least one region of interest 13.1, 13.2,..., 13.n. A plurality of second trained functions 14.1, 14.2, ..., 14.n can be described as bank of second trained functions 15. The positioning score 18 describes a rotation of the examining region. The examining region comprises a knee, the thorax, or a breast.

A modular pipeline for AI-based positioning check is proposed. A radiographic image or an X-ray image 11 is used as input. The expected output is the overall score, in particular the positioning score 18, indicating the quality of positioning for the given X-ray image 11. The AI-based sub-tasks are encapsulated by three modules:

4. ROI detector for object detection as a first trained function 12;
5. Bank of ROI scoring modules for classification or regression as a bank of second trained functions 15,
6. Overall scoring module for classification or regression as a third trained function 17.

The first trained function 12 which can be called the ROI Detector uses radiographic image or an X-ray image 11 as input, and provides relevant ROIs 13.1, 13.2,..., 13.n in the X-ray image 11 as output. The first trained function 12 or the ROI detector detects and identifies all relevant ROIs 13.1, 13.2,..., 13.n present in the X-ray image 11. This module can be realized using an available object detection network such as the RetinaNet.

The bank of second trained functions 15 which can be called a bank of ROI scoring modules uses a radiographic image or an X-ray image 11 as well as a ROI heatmap as input and provides individual ROI scores as output.

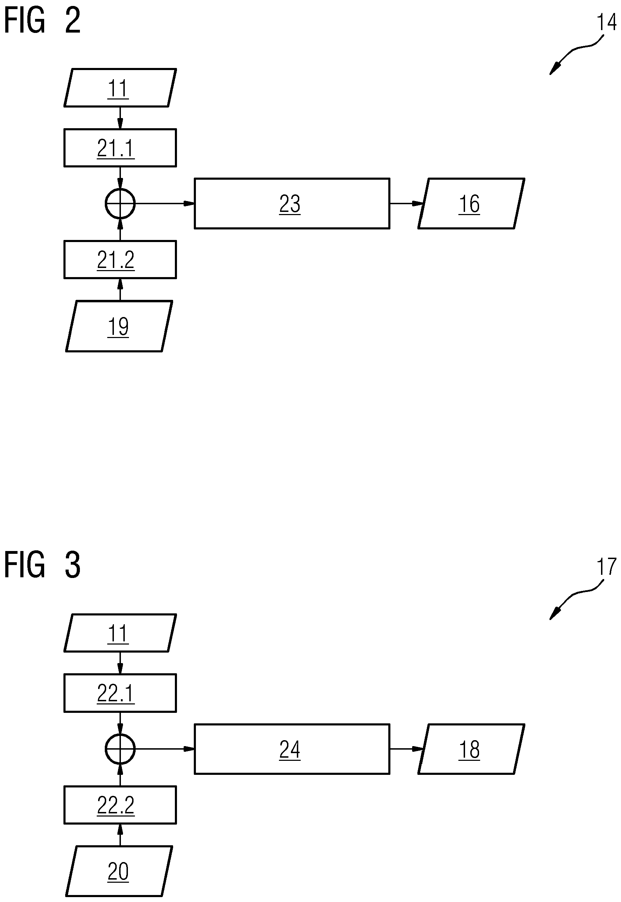

Fig. 2 displays an embodiment of the second trained function 14. The second trained functions 14 or the ROI scoring modules score each available ROI by focusing attention on the corresponding image region underlying the ROI. This is achieved by using an additional input based on a heatmap 19 representation of the ROI. An ROI scoring module can be realized using an available classifier architecture such as the Densenet 23 and modifying the initial convolution layer 21.1, 21.2 to focus the network attention based on the ROI heatmap. The classifier architecture can be replaced with a regression model to increase the scoring sensitivity from a categorical to a continuous range. An individual score 16 is provided as output.

Fig. 3 displays an embodiment of the third trained function 17. The third trained function 17 can be called the overall scoring module. The third trained function 17 uses a radiographic image or an X-ray image 11 as well as a score-weighted ROI heatmap 20 as input and provides the final positioning score 18 as output.

The overall scoring module computes the final positioning score for the input radiographic image by focusing attention on the image region underlying all available ROIs and their corresponding scores. This is achieved by using an additional input based on an aggregated score-weighted heatmap 20 representation of all available ROIs. An overall scoring module can be realized using an available classifier architecture such as the Densenet 24 and modifying the initial convolution layer 22.1, 22.2 to focus the network attention based on the aggregated, score-weighted heatmap 20. The classifier architecture can be replaced with a regression model to increase the scoring sensitivity from a categorical to a continuous range.

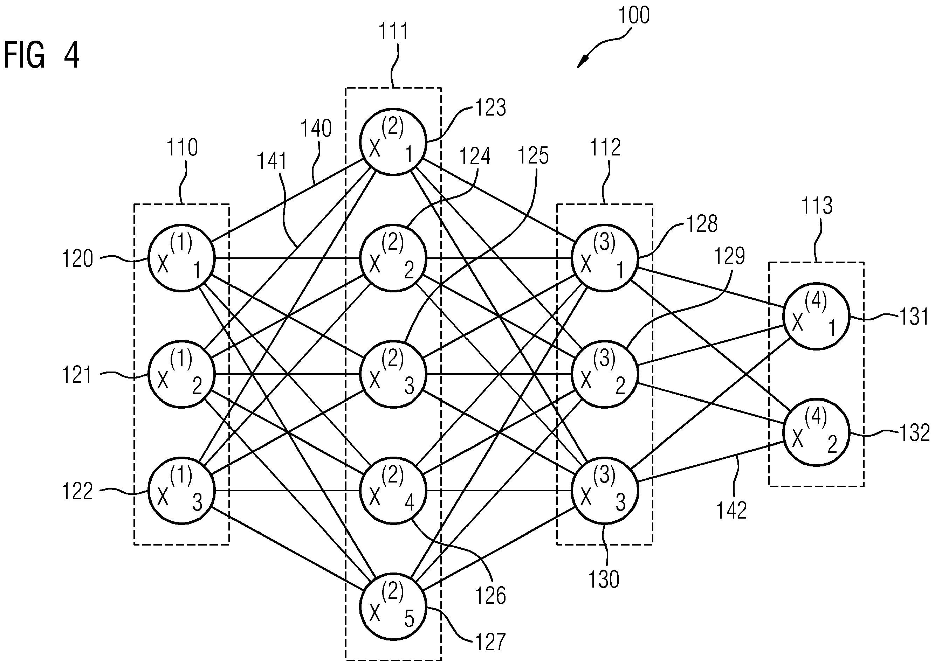

Fig. 4 displays an embodiment of an artificial neural network 100. Alternative terms for "artificial neural network" are "neural network", "artificial neural net" or "neural net".

The artificial neural network 100 comprises nodes 120, ..., 132 and edges 140, ..., 142, wherein each edge 140, ..., 142 is a directed connection from a first node 120, ..., 132 to a second node 120, ..., 132. In general, the first node 120, ..., 132 and the second node 120, ..., 132 are different nodes 120, ..., 132, it is also possible that the first node 120, ..., 132 and the second node 120, ..., 132 are identical. For example, in Fig. 1 the edge 140 is a directed connection from the node 120 to the node 123, and the edge 142 is a directed connection from the node 130 to the node 132. An edge 140, ..., 142 from a first node 120, ..., 132 to a second node 120, ..., 132 is also denoted as "ingoing edge" for the second node 120, ..., 132 and as "outgoing edge" for the first node 120, ..., 132.

In this embodiment, the nodes 120, ..., 132 of the artificial neural network 100 can be arranged in layers 110, ..., 113, wherein the layers can comprise an intrinsic order introduced by the edges 140, ..., 142 between the nodes 120, ..., 132. In particular, edges 140, ..., 142 can exist only between neighboring layers of nodes. In the displayed embodiment, there is an input layer 110 comprising only nodes 120, ..., 122 without an incoming edge, an output layer 113 comprising only nodes 131, 132 without outgoing edges, and hidden layers 111, 112 in-between the input layer 110 and the output layer 113. In general, the number of hidden layers 111, 112 can be chosen arbitrarily. The number of nodes 120, ..., 122 within the input layer 110 usually relates to the number of input values of the neural network, and the number of nodes 131, 132 within the output layer 113 usually relates to the number of output values of the neural network.

In particular, a (real) number can be assigned as a value to every node 120, ..., 132 of the neural network 100. Here, $x^{(n)}_i$ denotes the value of the i-th node 120, ..., 132 of the n-th layer 110, ..., 113. The values of the nodes 120, ..., 122 of the input layer 110 are equivalent to the input values of the neural network 100, the values of the nodes 131, 132 of the output layer 113 are equivalent to the output value of the neural network 100. Furthermore, each edge 140, ..., 142 can comprise a weight being a real number, in particular, the weight is a real number within the interval [-1, 1] or within the interval [0, 1]. Here, $w^{(m,n)}_{i,j}$ denotes the weight of the edge between the i-th node 120, ..., 132 of the m-th layer 110, ..., 113 and the j-th node 120, ..., 132 of the n-th layer 110, ..., 113. Furthermore, the abbreviation $w^{(n)}_{i,j}$ is defined for the weight $w^{(n,n+1)}_{i,j}$.

In particular, to calculate the output values of the neural network 100, the input values are propagated through the neural network. In particular, the values of the nodes 120, ..., 132 of the (n+1)-th layer 110, ..., 113 can be calculated based on the values of the nodes 120, ..., 132 of the n-th layer 110, ..., 113 by

$$x^{(n+1)}_j \;=\; f\left(\sum_i x^{(n)}_i \cdot w^{(n)}_{i,j}\right).$$

Herein, the function f is a transfer function (another term is "activation function"). Known transfer functions are step functions, sigmoid function (e.g. the logistic function, the generalized logistic function, the hyperbolic tangent, the Arctangent function, the error function, the smoothstep function) or rectifier functions. The transfer function is mainly used for normalization purposes.

In particular, the values are propagated layer-wise through the neural network, wherein values of the input layer 110 are given by the input of the neural network 100, wherein values of the first hidden layer 111 can be calculated based on the values of the input layer 110 of the neural network, wherein values of the second hidden layer 112 can be calculated based in the values of the first hidden layer 111, etc.

In order to set the values $w^{(m,n)}_{i,j}$ for the edges, the neural network 100 has to be trained using training data. In particular, training data comprises training input data and training output data (denoted as $t_i$). For a training step, the neural network 100 is applied to the training input data to generate calculated output data. In particular, the training data and the calculated output data comprise a number of values, said number being equal with the number of nodes of the output layer.

In particular, a comparison between the calculated output data and the training data is used to recursively adapt the weights within the neural network 100 (backpropagation algorithm). In particular, the weights are changed according to

$$w'^{(n)}_{i,j} \;=\; w^{(n)}_{i,j} \;-\; \gamma \cdot \delta^{(n)}_j \cdot x^{(n)}_i$$

wherein $\gamma$ is a learning rate, and the numbers $\delta^{(n)}_j$ can be recursively calculated as

$$\delta^{(n)}_j \;=\; \left(\sum_k \delta^{(n+1)}_k \cdot w^{(n+1)}_{j,k}\right) \cdot f'\left(\sum_i x^{(n)}_i \cdot w^{(n)}_{i,j}\right)$$

based on $\delta^{(n+1)}_j$, if the (n+1)-th layer is not the output layer, and

$$\delta^{(n)}_j \;=\; \left(x^{(n+1)}_k - t^{(n+1)}_j\right) \cdot f'\left(\sum_i x^{(n)}_i \cdot w^{(n)}_{i,j}\right)$$

if the (n+1)-th layer is the output layer 113, wherein f' is the first derivative of the activation function, and $y^{(n+1)}_j$ is the comparison training value for the j-th node of the output layer 113.

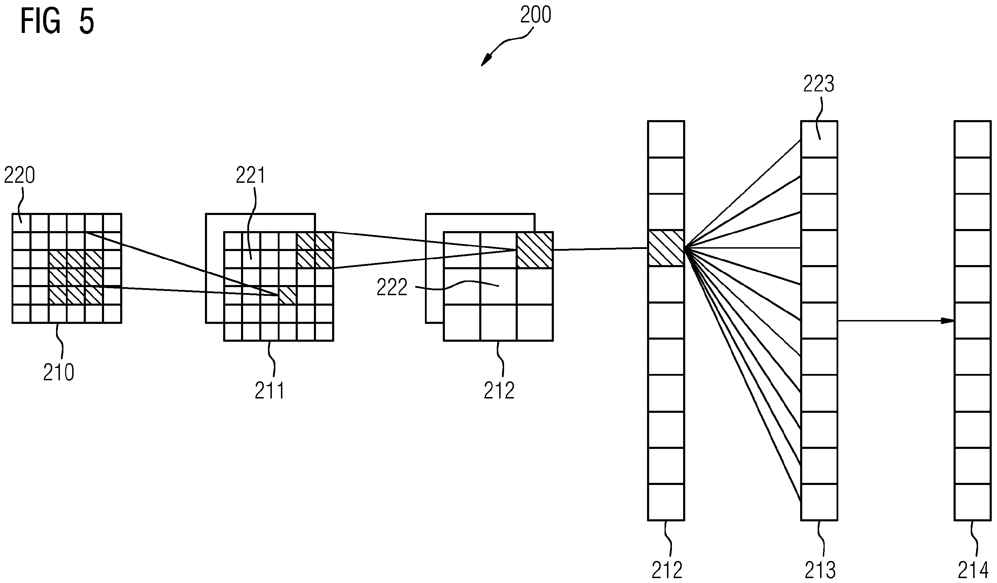

Fig. 5 displays an embodiment of a convolutional neural network 200. In the displayed embodiment, the convolutional neural network comprises 200 an input layer 210, a convolutional layer 211, a pooling layer 212, a fully connected layer 213 and an output layer 214. Alternatively, the convolutional neural network 200 can comprise several convolutional layers 211, several pooling layers 212 and several fully connected layers 213, as well as other types of layers. The order of the layers can be chosen arbitrarily, usually fully connected layers 213 are used as the last layers before the output layer 214.

In particular, within a convolutional neural network 200 the nodes 220, ..., 224 of one layer 210, ..., 214 can be considered to be arranged as a d-dimensional matrix or as a d-dimensional image. In particular, in the two-dimensional case the value of the node 220, ..., 224 indexed with i and j in the n-th layer 210, ..., 214 can be denoted as $x^{(n)}[i,j]$. However, the arrangement of the nodes 220, ..., 224 of one layer 210, ..., 214 does not have an effect on the calculations executed within the convolutional neural network 200 as such, since these are given solely by the structure and the weights of the edges.

In particular, a convolutional layer 211 is characterized by the structure and the weights of the incoming edges forming a convolution operation based on a certain number of kernels. In particular, the structure and the weights of the incoming edges are chosen such that the values $x^{(n)}_k$ of the nodes 221 of the convolutional layer 211 are calculated as a convolution $x^{(n)}_k = K_k * x^{(n-1)}$ based on the values $x^{(n-1)}$ of the nodes 220 of the preceding layer 210, where the convolution * is defined in the two-dimensional case as

$$x^{(n)}_k[i,j] = (K_k * x^{(n-1)})[i,j] = \sum_{i'} \sum_{j'} K_k[i',j'] \cdot x^{(n-1)}[i-i', j-j'].$$

Here the k-th kernel $K_k$ is a d-dimensional matrix (in this embodiment a two-dimensional matrix), which is usually small compared to the number of nodes 220, ..., 224 (e.g. a 3x3 matrix, or a 5x5 matrix). In particular, this implies that the weights of the incoming edges are not independent, but chosen such that they produce said convolution equation. In particular, for a kernel being a 3x3 matrix, there are only 9 independent weights (each entry of the kernel matrix corresponding to one independent weight), irrespectively of the number of nodes 220, ..., 224 in the respective layer 210, ..., 214. In particular, for a convolutional layer 211 the number of nodes 221 in the convolutional layer is equivalent to the number of nodes 220 in the preceding layer 210 multiplied with the number of kernels.

If the nodes 220 of the preceding layer 210 are arranged as a d-dimensional matrix, using a plurality of kernels can be interpreted as adding a further dimension (denoted as "depth" dimension), so that the nodes 221 of the convolutional layer 221 are arranged as a (d+1)-dimensional matrix. If the nodes 220 of the preceding layer 210 are already arranged as a (d+1)-dimensional matrix comprising a depth dimension, using a plurality of kernels can be interpreted as expanding along the depth dimension, so that the nodes 221 of the convolutional layer 221 are arranged also as a (d+1)-dimensional matrix, wherein the size of the (d+1)-dimensional matrix with respect to the depth dimension is by a factor of the number of kernels larger than in the preceding layer 210.

The advantage of using convolutional layers 211 is that spatially local correlation of the input data can exploited by enforcing a local connectivity pattern between nodes of adjacent layers, in particular by each node being connected to only a small region of the nodes of the preceding layer.

In the displayed embodiment, the input layer 210 comprises 36 nodes 220, arranged as a two-dimensional 6x6 matrix. The convolutional layer 211 comprises 72 nodes 221, arranged as two two-dimensional 6x6 matrices, each of the two matrices being the result of a convolution of the values of the input layer with a kernel. Equivalently, the nodes 221 of the convolutional layer 211 can be interpreted as arranges as a three-dimensional 6x6x2 matrix, wherein the last dimension is the depth dimension.

A pooling layer 212 can be characterized by the structure and the weights of the incoming edges and the activation function of its nodes 222 forming a pooling operation based on a nonlinear pooling function f. For example, in the two dimensional case the values $x^{(n)}$ of the nodes 222 of the pooling layer 212 can be calculated based on the values $x^{(n-1)}$ of the nodes 221 of the preceding layer 211 as

$$x^{(n)}[i,j] = f(x^{(n-1)}[id_1, jd_2], ..., x^{(n-1)}[id_1+d_1-1, jd_2+d_2-1])$$

In other words, by using a pooling layer 212 the number of nodes 221, 222 can be reduced, by replacing a number $d_1 \cdot d_2$ of neighboring nodes 221 in the preceding layer 211 with a single node 222 being calculated as a function of the values of said number of neighboring nodes in the pooling layer. In particular, the pooling function f can be the max-function, the average or the L2-Norm. In particular, for a pooling layer 212 the weights of the incoming edges are fixed and are not modified by training.

The advantage of using a pooling layer 212 is that the number of nodes 221, 222 and the number of parameters is reduced. This leads to the amount of computation in the network being reduced and to a control of overfitting.

In the displayed embodiment, the pooling layer 212 is a max-pooling, replacing four neighboring nodes with only one node, the value being the maximum of the values of the four neighboring nodes. The max-pooling is applied to each d-dimensional matrix of the previous layer; in this embodiment, the max-pooling is applied to each of the two two-dimensional matrices, reducing the number of nodes from 72 to 18.

A fully-connected layer 213 can be characterized by the fact that a majority, in particular, all edges between nodes 222 of the previous layer 212 and the nodes 223 of the fully-connected layer 213 are present, and wherein the weight of each of the edges can be adjusted individually.

In this embodiment, the nodes 222 of the preceding layer 212 of the fully-connected layer 213 are displayed both as two-dimensional matrices, and additionally as non-related nodes (indicated as a line of nodes, wherein the number of nodes was reduced for a better presentability). In this embodiment, the number of nodes 223 in the fully connected layer 213 is equal to the number of nodes 222 in the preceding layer 212. Alternatively, the number of nodes 222, 223 can differ.

Furthermore, in this embodiment the values of the nodes 224 of the output layer 214 are determined by applying the Softmax function onto the values of the nodes 223 of the preceding layer 213. By applying the Softmax function, the sum of the values of all nodes 224 of the output layer is 1, and all values of all nodes 224 of the output layer are real numbers between 0 and 1. In particular, if using the convolutional neural network 200 for categorizing input data, the values of the output layer can be interpreted as the probability of the input data falling into one of the different categories.

A convolutional neural network 200 can also comprise a ReLU (acronym for "rectified linear units") layer. In particular, the number of nodes and the structure of the nodes contained in a ReLU layer is equivalent to the number of nodes and the structure of the nodes contained in the preceding layer. In particular, the value of each node in the ReLU layer is calculated by applying a rectifying function to the value of the corresponding node of the preceding layer. Examples for rectifying functions are $f(x) = max(0,x)$, the tangent hyperbolics function or the sigmoid function.

In particular, convolutional neural networks 200 can be trained based on the backpropagation algorithm. For preventing overfitting, methods of regularization can be used, e.g. dropout of nodes 220, ..., 224, stochastic pooling, use of artificial data, weight decay based on the L1 or the L2 norm, or max norm constraints.

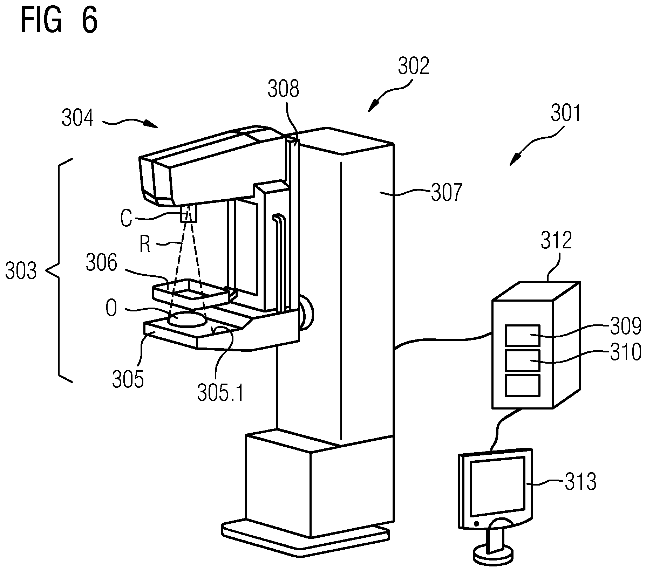

In Figure 6, a mammography system 301, in particular in the form of a tomosynthesis system, is shown by way of example and roughly schematically. Relative directions such as "above", "below", etc. refer to a tomosynthesis system set up for operation as intended. The mammography system 301 includes a tomosynthesis device 302 and a control device 312. The tomosynthesis device 302 has a standing column 307 and a source-detector arrangement 303, which in turn comprise an X-ray source 304 and an X-ray detector 305 with a detector area 5.1. Standing column 307 is in operation on the ground. The source-detector arrangement 303 can be connected to it in a movable manner, so that the height of the detector surface 305.1, i.e. the distance to the substrate, can be adjusted to a chest height of a patient.

A breast O of the patient (shown schematically here) is the object of examination, the breast O, for an examination on the top of the detector surface 305.1. Above the chest O and the detector surface 305.1 a compression plate 306 is arranged, which is movably connected to the source-detector arrangement 303. For the examination, the breast O is compressed and at the same time fixed by lowering the compression plate 306 to it, so that pressure is applied on the breast O between compression plate 306 and detector surface 305.1.

The X-ray emitter 304 is arranged and designed opposite the X-ray detector 305 in such a way that the X-ray detector 305 detects X-rays R emitted by it after at least part of the X-ray radiation R has penetrated the patient's breast O. The X-ray emitter 304 is relative to the X-ray detector 305 by means of a rotary arm 308, for example, in a range of $\pm$ 25° around a basic position, in which it is perpendicular to the detector surface 305.1.

The mammography system 301 can in particular a control device 12 and a computer unit with a scoring system 309 and a training unit 310. The control device 312 is connected to a terminal 313, for example having a user interface or display unit, through which a user can communicate commands to the tomosynthesis system 301 or retrieve measurement results, for example the X-ray. The control device 312 may be located in the same room as the tomosynthesis device 302, but it may also be located in an adjacent control room or at an even greater spatial distance.

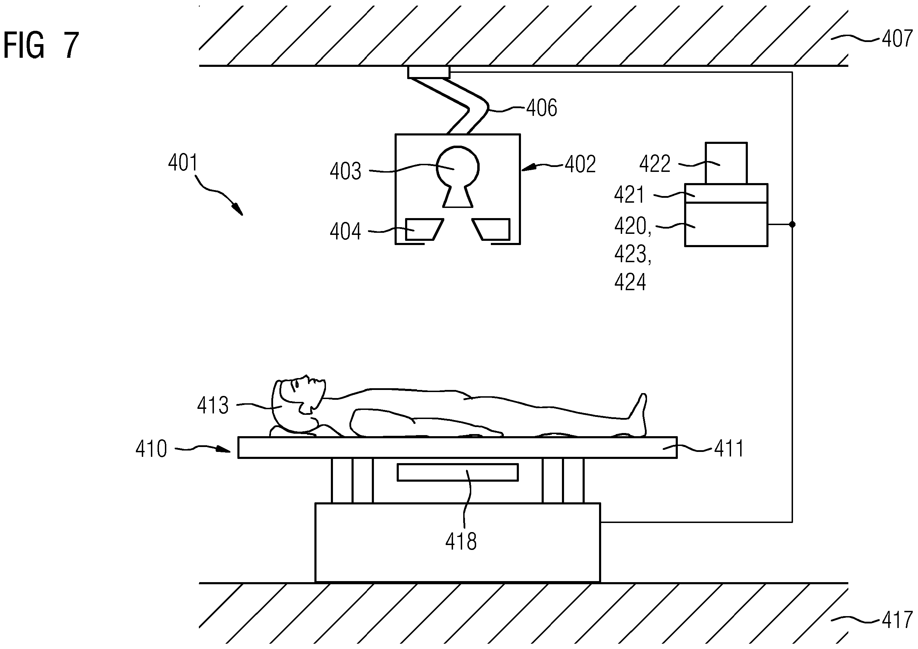

Fig. 7 shows an exemplary embodiment of an X-ray system 401, especially a radiography system, according to the invention. The X-ray system 401 has a patient positioning device 410 with a table 411 fixed to the floor 417. The object 413 lies on the table 411. The patient positioning device 410 further comprises an X-ray detector unit 418.

The X-ray system 401 comprises an X-ray source 403 and an X-ray detector unit 418. The X-ray source unit 402, which comprises the X-ray source 403 and a collimator unit 404. The X-ray source unit 402 can be connected to the ceiling 407 of the examination room by means of a ceiling mount 406. By means of the ceiling mount 406, the X-ray source 403 can be moved.

The X-ray system 401 may also comprise an input unit 421 and an output unit 422. The input unit 421 and the output unit 422 may be connected to the control unit 420. The control unit 420 comprises the scoring system 423. The control unit 420 may further comprise or be connected to the training unit 424.

Although the invention has been further illustrated in detail by the preferred embodiments, the invention is not limited by the disclosed examples and other variations may be derived therefrom by those skilled in the art without departing from the scope of protection of the invention as defined by the appended claims.

**Claims**

1. Computer-implemented method (10) for providing a positioning score regarding a positioning of an examining region in an X-ray image, comprising:

   - Receiving input data wherein the input data comprises an X-ray image (11) comprising the examining region,
   - Applying a first trained function (12) to the input data, wherein at least one region of interest (13.1, 13.2,..., 13.n) is detected in the X-ray image and a heatmap (19) comprising the at least one region of interest is generated,
   - Applying a second trained function (14, 14.1, 14.2, ..., 14.n) to the input data and the heatmap, wherein an individual score for each of the at least one region of interest is generated, and a score-weighted heatmap (20) is generated based on the at least one region of interest and the individual scores (16.1, 16.2, ..., 16.n),
   - Applying a third trained function (17) to the input data and the score-weighted heatmap, wherein a positioning score is generated,
   - Providing the positioning score (18).

2. Method according to claim 1, wherein the X-ray image is a two-dimensional X-ray image.

3. Method according one of the preceding claims, wherein the first trained function is based on an object detection network, preferably the RetinaNet.

4. Method according one of the preceding claims, wherein the second trained function and/or the third trained function is based on a classifier, preferably the Densenet, or a regression model.

5. Method according to claim 4, wherein the initial convolution layer is modified to focus the network attention based on the heatmap and/or the score-weighted heatmap.

6. Method according one of the preceding claims, wherein the heatmap and/or the at least one region of interest is displayed.

7. Method according one of the preceding claims, wherein the user can adjust the heatmap and/or the at least one region of interest.

8. Method according one of the preceding claims, wherein the positioning score describes a rotation of the examining region.

9. Method according one of the preceding claims, wherein the examining region comprises a knee, the thorax, or a breast.

10. Scoring system (309, 423), comprising:

    - a first interface, configured for receiving input data, wherein the input data comprises an X-ray image comprising the examining region,
    - a first computation unit, configured for applying a first trained function to the first input data, wherein first output data is generated, wherein at least one region of interest (13) is detected in the X-ray image and a heatmap comprising the at least one region of interest is generated,
    - a second computation unit, configured for applying a second trained function to the input data and the heatmap, wherein an individual score for each of the at least one region of interest is generated, and a score-weighted heatmap is generated based on the at least one region of interest and the individual scores,
    - a third computation unit, configured for applying a third trained function to the input data and the score-weighted heatmap, wherein a positioning score is generated,
    - a second interface, configured for providing the positioning score.

11. A computer program product comprising instructions which, when the program is executed by a scoring system, cause the scoring system to carry out the method of one of the claims 1 to 9.

12. A computer-readable medium comprising instructions which, when executed by a scoring system, cause the scoring system to carry out the method of one of the claims 1 to 9.

13. An X-ray system (401) comprising the scoring system according to claim 10.

14. An X-ray system according to claim 13, wherein the X-ray system is a radiography system or a mammography system (301).

**Patentansprüche**

1. Computerimplementiertes Verfahren (10) zum Bereitstellen einer Positionierungsbewertung in Bezug auf eine Positionierung eines Untersuchungsbereichs in einem Röntgenbild, umfassend:

   - Empfangen von Eingabedaten, wobei die Eingabedaten ein Röntgenbild (11) umfassen, umfassend den Untersuchungsbereich,
   - Anwenden einer ersten trainierten Funktion (12) auf die Eingabedaten, wobei mindestens eine Interessensregion (13.1, 13.2, ..., 13.n) in dem Röntgenbild erfasst wird und eine Heatmap (19), umfassend die mindestens eine Interessensregion, erzeugt wird,
   - Anwenden einer zweiten trainierten Funktion (14, 14.1, 14.2, ..., 14.n) auf die Eingabedaten und die Heatmap, wobei eine individuelle Bewertung für jede der mindestens einen Interessensregion erzeugt wird und eine bewertungsgewichtete Heatmap (20) auf Grundlage der mindestens einen Interessensregion und der individuellen Bewertungen (16.1, 16.2, ..., 16.n) erzeugt wird,
   - Anwenden einer dritten trainierten Funktion (17) auf die Eingabedaten und die bewertungsgewichtete Heatmap, wobei eine Positionierungsbewertung erzeugt wird,
   - Bereitstellen der Positionierungsbewertung (18).

2. Verfahren nach Anspruch 1, wobei das Röntgenbild ein zweidimensionales Röntgenbild ist.

3. Verfahren nach einem der vorhergehenden Ansprüche, wobei die erste trainierte Funktion auf einem Objektdetektionsnetzwerk basiert, vorzugsweise dem RetinaNet.

4. Verfahren nach einem der vorhergehenden Ansprüche, wobei die zweite trainierte Funktion und/oder die dritte trainierte Funktion auf einem Klassifikator, vorzugsweise dem Densenet, oder auf einem Regressionsmodell basiert.

5. Verfahren nach Anspruch 4, wobei die anfängliche Faltungsschicht modifiziert wird, um die Aufmerksamkeit des Netzwerks basierend auf der Heatmap und/oder der bewertungsgewichteten Heatmap zu fokussieren.

6. Verfahren nach einem der vorhergehenden Ansprüche, wobei die Heatmap und/oder die mindestens eine Interessensregion angezeigt wird.

7. Verfahren nach einem der vorhergehenden Ansprüche, wobei der Benutzer die Heatmap und/oder die mindestens eine Interessensregion einstellen kann.

8. Verfahren nach einem der vorhergehenden Ansprüche, wobei die Positionierungsbewertung eine Drehung des Untersuchungsbereichs beschreibt.

9. Verfahren nach einem der vorhergehenden Ansprüche, wobei der Untersuchungsbereich ein Knie, den Brustkorb oder eine Brust umfasst.

10. Bewertungssystem (309, 423), umfassend:

    - eine erste Schnittstelle, dazu ausgelegt, Eingabedaten zu empfangen, wobei die Eingabedaten ein Röntgenbild umfassen, umfassend den Untersuchungsbereich,
    - eine erste Berechnungseinheit, ausgelegt zum Anwenden einer ersten trainierten Funktion auf die ersten Eingabedaten, wobei die ersten Ausgabedaten erzeugt werden, wobei die mindestens eine Interessensregion (13) in dem Röntgenbild erfasst wird und eine Heatmap, umfassend die mindestens eine Interessensregion, erzeugt wird,

- eine zweite Berechnungseinheit, ausgelegt zum Anwenden einer zweiten trainierten Funktion auf die Eingabedaten und die Heatmap, wobei eine individuelle Bewertung für jede der mindestens einen Interessensregion erzeugt wird und eine bewertungsgewichtete Heatmap auf Grundlage der mindestens einen Interessensregion und der individuellen Bewertungen erzeugt wird,
- eine dritte Berechnungseinheit, ausgelegt zum Anwenden einer dritten trainierten Funktion auf die Eingabedaten und die bewertungsgewichtete Heatmap, wobei eine Positionierungsbewertung erzeugt wird,
- eine zweite Schnittstelle, ausgelegt zum Bereitstellen der Positionierungsbewertung.

11. Computerprogrammprodukt, umfassend Anweisungen, die, wenn das Programm durch ein Bewertungssystem ausgeführt wird, das Bewertungssystem zum Ausführen des Verfahrens nach einem der Ansprüche 1 bis 9 veranlassen.

12. Computerlesbares Medium, umfassend Anweisungen, die, wenn sie durch ein Bewertungssystem ausgeführt werden, das Bewertungssystem zum Ausführen des Verfahrens nach einem der Ansprüche 1 bis 9 veranlassen.

13. Röntgensystem (401), umfassend das Bewertungssystem nach Anspruch 10.

14. Röntgensystem nach Anspruch 13, wobei das Röntgensystem ein Radiographiesystem oder ein Mammographiesystem (301) ist.

## Revendications

1. Procédé (10) mis en œuvre par ordinateur pour donner un score de positionnement concernant le positionnement d'une région en examen dans une image par rayon X, comprenant :

   - recevoir une donnée d'entrée, la donnée d'entrée comprenant une image (11) par rayon X comprenant la région en examen,
   - appliquer une première fonction (12) entraînée à la donnée d'entrée, dans lequel au moins une région à laquelle on s'intéresse (13.1, 13.2, ..., 13.n) est détectée dans l'image par rayon X et une cartographie (19) de la chaleur comprenant la au moins une région à laquelle on s'intéresse est produite,
   - appliquer une deuxième fonction (14, 14.1, 14.2, ..., 14.n) entraînée à la donnée d'entrée et à la cartographie de la chaleur, dans lequel un score individuel pour chacune de la au moins une région à laquelle on s'intéresse est créée, et une cartographie (20) de la chaleur pondérée par le score est créée sur la base de la au moins une région à laquelle on s'intéresse et des scores (16.1, 16.2, ..., 16.n) individuels,
   - appliquer une troisième fonction (17) entraînée à la donnée d'entrée et à la cartographie de la chaleur pondérée en score, un score de positionnement étant produit,
   - donner le score (18) de positionnement.

2. Procédé suivant la revendication 1, dans lequel l'image par rayon X est une image par rayon X en deux dimensions.

3. Procédé suivant l'une des revendications précédentes, dans lequel la première fonction entraînée repose sur un réseau de détection d'objet, de préférence le RetinaNet.

4. Procédé suivant l'une des revendications précédentes, dans lequel la deuxième fonction entraînée et/ou la troisième fonction entraînée repose sur un classificateur, de préférence le Densenet, ou sur un modèle de régression.

5. Procédé suivant la revendication 4, dans lequel la couche de convolution initiale est modifiée pour focaliser l'attention du réseau sur la base de la cartographie de la chaleur et/ou de la cartographie de la chaleur pondérée en score.

6. Procédé suivant l'une des revendications précédentes, dans lequel la cartographie de la chaleur et/ou de la au moins une région à laquelle on s'intéresse est affichée.

7. Procédé suivant l'une des revendications précédentes, dans lequel l'utilisateur peut régler la cartographie de la chaleur et/ou la au moins une région à laquelle on s'intéresse.

8. Procédé suivant l'une des revendications précédentes, dans lequel le score de positionnement décrit une rotation de la région à laquelle on s'intéresse.

9. Procédé suivant l'une des revendications précédentes, dans lequel la région en examen comprend un genou, le thorax ou un sein.

10. Système (309, 423) pour donner un score, comprenant :

   - une première interface, configurée pour recevoir une donnée d'entrée, la donnée d'entrée comprenant une image par rayon X comprenant la région en examen,
   - une première unité informatique, configurée pour appliquer une première fonction entraînée à la première donnée d'entrée, dans laquelle une première donnée de sortie est produite, dans laquelle au moins une région à laquelle on s'intéresse (13) est détectée dans l'image par rayon X et une cartographie de la chaleur comprenant la au moins une région à laquelle on s'intéresse est produite,
   - une deuxième unité informatique, configurée pour appliquer une deuxième fonction entraînée à la donnée d'entrée et à la cartographie de la chaleur, dans laquelle un score individuel pour chacune de la au moins une région à laquelle on s'intéresse est produit, et une cartographie de la chaleur pondérée en score est produite sur la base de la au moins une région à laquelle on s'intéresse et les scores individuels,
   - une troisième unité informatique, configurée pour appliquer une troisième fonction entraînée à la donnée d'entrée et à la cartographie de la chaleur pondérée en score, un score de positionnement étant produit,
   - une deuxième interface, configurée pour donner le score de positionnement.

11. Un produit de programme d'ordinateur comprenant des instructions qui, lorsque le programme est exécuté par un système pour donner un score, font que le système pour donner un score exécute le procédé suivant l'une des revendications 1 à **9.**

12. Support déchiffrable par ordinateur comprenant des instructions qui, lorsqu'elles sont exécutées par un système donnant un score, font que le système donnant un score exécute le procédé de l'une des revendications 1 à 9.

13. Système (401) par rayon X comprenant le système pour donner un score suivant la revendication 10.

14. Système par rayon X suivant la revendication 13, dans lequel le système par rayon X est un système de radiographie ou un système (301) de mammographie.

FIG 1

EP 4 345 742 B1

FIG 2

14

FIG 3

17

FIG 4

FIG 5

FIG 6

FIG 7

EP 4 345 742 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210321968 A1

**Non-patent literature cited in the description**

- **B. HOFMANN et al.** *Image rejects in general direct radiography, (Norway*